# FASCICULE DE BREVET EUROPEEN

(11) **EP 1 971 973 B1**
(45) Date de publication et mention de la délivrance du brevet: **07.03.2018**
(21) Numéro de dépôt: 07717729.3
(22) Date de dépôt: 10.01.2007
(51) Int. Cl.: G08G 5/02, G05D 1/06, G01C 23/00, G01S 19/15

(54) **SYSTEME DE PILOTAGE D'UN AERONEF**
SYSTEM ZUR STEUERUNG EINES KRAFTFAHRZEUGS
SYSTEM FOR PILOTING AN AIRCRAFT,

(30) Priorité: 11.01.2006 FR 0600247
(43) Date de publication de la demande: 24.09.2008
(73) Titulaire: AIRBUS OPERATIONS (SAS), 31060 Toulouse (FR)
(72) Inventeur: MARKITON, Vincent, F-31470 Fontenilles (FR); LAINE, Franck, F-31770 Colomiers (FR); RENAULT, Edith, F-31000 Toulouse (FR)
(74) Mandataire: Gevers & Orès
(86) Numéro de dépôt international: PCT/FR2007/000037
(87) Numéro de publication internationale: WO 2007/080314

(56) Documents cités:
- EP-A1- 1 335 258
- EP-A2- 1 464 576
- FR-A- 2 852 686
- US-B1- 6 239 745
- US-B1- 6 342 853
- US-B1- 6 570 531
- PARKINSON B W ET AL: "AIRCRAFT AUTOMATIC LANDING SYSTEMS USING GPS", JOURNAL OF NAVIGATION, ROYAL INSTITUTE OF NAVIGATION, LONDON, GB, vol. 42, no. 1, 1 January 1989 (1989-01-01), pages 47-59, XP009072529, ISSN: 0373-4633

## Description

La présente invention concerne un système de pilotage d'un aéronef, au moins pour piloter l'aéronef lors d'une approche autonome en vue d'un atterrissage, en particulier dans le domaine militaire.

Une approche autonome doit permettre de faire voler l'aéronef en conditions météorologiques de vol aux instruments de type IMC ("Instrument Meteorological Conditions" en anglais), jusqu'à une hauteur de décision, par exemple 200 pieds (environ 60 mètres), qui correspond à la hauteur de décision d'une approche de précision de type ILS ("Instrument Landing System" en anglais, à savoir système d'atterrissage aux instruments), sans utilisation de moyens de navigation situés au sol. Lors d'une telle approche autonome, les moyens de positionnement utilisés par l'aéronef sont donc exclusivement des moyens embarqués, et notamment un système de positionnement par satellites, par exemple de type GPS ("Global Positioning System" en anglais), une centrale inertielle, et des capteurs barométriques. L'approche peut également être réalisée sans contrôleur de l'espace aérien. A ladite hauteur de décision, l'équipage de l'aéronef doit visuellement acquérir la piste. Si tel est le cas, il finit l'atterrissage en mode visuel à l'aide d'un guidage manuel. En revanche, si à cette hauteur de décision, l'équipage ne voit pas la piste, il doit effectuer une remise des gaz de manière à faire remonter l'aéronef à une altitude de sécurité prédéterminée. La trajectoire d'approche utilisée pour réaliser une telle approche autonome est créée avant le vol et décrite sur une carte papier qui est à la disposition de l'équipage au cours du vol. Pour ce faire, la configuration du terrain autour de la piste d'atterrissage a été analysée et des marges vis-à-vis des obstacles ont été définies. Cette trajectoire d'approche est également sauvegardée dans une base de données du système de pilotage de l'aéronef.

Par le document FR-2 852 686, on connaît un système de pilotage d'un aéronef destiné à piloter l'aéronef lors d'une approche de non précision. Ce système de pilotage est surtout utilisé dans le domaine civil. Un tel système de pilotage usuel qui concerne donc une approche de non précision présente un objectif majeur commun à une approche autonome telle que considérée dans la présente invention, à savoir que ledit système de pilotage doit être autonome vis-à-vis des moyens de navigation situés au sol et doit ainsi pouvoir réaliser l'approche à n'importe quel endroit sur le globe terrestre.

Un tel système de pilotage usuel destiné à une approche de non précision comporte généralement :
- un système de gestion de vol de type FMS ("Flight Management System" en anglais), qui détermine la position effective de l'aéronef, et ceci :
   - dans le cas nominal, en effectuant une hybridation d'informations GPS ("Global Positionning System" en anglais) d'un récepteur multi-mode d'aide à l'atterrissage de type MMR ("Multi Mode Receiver" en anglais) avec des informations inertielles issues d'une unité de référence inertielle ; et
   - dans des cas dégradés, en effectuant une hybridation des informations inertielles avec des informations de radionavigation ;
- un récepteur multi-mode d'aide à l'atterrissage, de type MMR, qui reçoit, en particulier dudit système de gestion de vol, la position effective de l'aéronef et des informations permettant de caractériser un axe d'approche virtuel, et qui détermine à partir de ces informations des déviations angulaires latérales et verticales entre la position effective de l'aéronef et la position qu'il aurait s'il était sur ledit axe d'approche virtuel ;
- un calculateur de guidage de vol de type FG ("Flight Guidance" en anglais) qui calcule, à partir des déviations angulaires reçues dudit récepteur multi-mode d'aide à l'atterrissage, et à partir de la distance par rapport à l'axe de la piste d'atterrissage, des déviations linéaires et qui utilise ces déviations linéaires pour calculer, à l'aide d'au moins une loi de pilotage usuel, des consignes de guidage de l'aéronef ; et
- au moins un dispositif d'aide au pilotage, par exemple un pilote automatique ou un directeur de vol, qui permet le guidage de l'aéronef jusqu'à son atterrissage, conformément auxdites consignes de vol, et ceci soit automatiquement (pilote automatique), soit manuellement (directeur de vol).

On notera toutefois que les objectifs d'une approche autonome, en particulier dans le domaine militaire, sont plus ambitieux que ceux d'une approche de non précision de type précité dans le domaine civil. En particulier, les hauteurs de décision envisagées sont au minimum de 200 pieds (environ 60 mètres) pour une approche autonome, alors qu'elles sont au minimum de 250 pieds (environ 75 mètres) pour une approche de non précision. En conséquence, le cône de sécurité dans lequel doit rester l'aéronef pour effectuer l'approche est plus petit en approche autonome qu'en approche de non précision. De plus, en approche autonome, l'absence de contrôleur aérien supprime un moyen de surveillance, par rapport à la situation existant pour une approche de non précision dans le domaine civil.

Aussi, le système de pilotage usuel de type précité, qui est bien approprié pour piloter un aéronef lors d'une approche de non précision, ne permet de garantir :
- ni la tenue des performances exigées pour une approche autonome, les performances les plus contraignantes étant l'intégrité et la précision du positionnement vertical de l'aéronef, ainsi que la flexibilité du pilote automatique permettant de capturer des segments de faible longueur et de maintenir précisément des pentes faibles et fortes ;
- ni le respect du caractère critique de certains paramètres (en particulier l'axe d'approche virtuel selon lequel sera guidé l'aéronef, ainsi que la position en trois dimensions dudit aéronef) utilisés par le système de pilotage.

La présente invention a pour objet de remédier à ces inconvénients. Elle concerne un système de pilotage permettant de mettre en oeuvre une approche autonome de type précité, en garantissant à la fois la tenue des performances exigées et le respect du caractère critique de certains paramètres utilisés.

A cet effet, l'invention concerne un système de pilotage d'un aéronef selon les présentes revendications 1 à 3. Ainsi, grâce à l'invention, le système de pilotage ne comporte pas de récepteur multi-mode d'aide à l'atterrissage à la différence d'un système de pilotage usuel précité, et le calculateur de guidage de vol calcule directement, à l'aide de l'indication de position et des informations caractérisant l'axe d'approche virtuel, les déviations linéaires qui sont utilisées pour calculer les consignes de pilotage. Ceci évite de réaliser des conversions de déviations angulaires en déviations linéaires, telles que réalisées dans le système de pilotage usuel précité. Le système de pilotage conforme à l'invention permet également d'augmenter la flexibilité d'un moyen d'aide au pilotage, en particulier un pilote automatique, utilisé.

De plus, le fait de réaliser le calcul des déviations linéaires et le calcul des consignes du guidage dans un seul et même calculateur de guidage de vol permet de diminuer les temps de latence.

Par conséquent, grâce au système de pilotage conforme à l'invention, on optimise le guidage de manière à pouvoir voler avec les mêmes lois de guidage des pentes faibles et des pentes fortes et à pouvoir capturer des axes d'approche relativement courts.

En outre, comme le système de pilotage conforme à l'invention ne comporte pas de récepteur multi-mode d'aide à l'atterrissage (à la différence du système de pilotage usuel précité), il présente une architecture simplifiée.

Dans un mode de réalisation particulier, le système de pilotage conforme à l'invention comporte, de plus, au moins un moyen d'aide au pilotage, par exemple un pilote automatique ou un directeur de vol, qui est relié audit calculateur de guidage de vol et qui utilise lesdites consignes de guidage pour aider à guider l'aéronef.

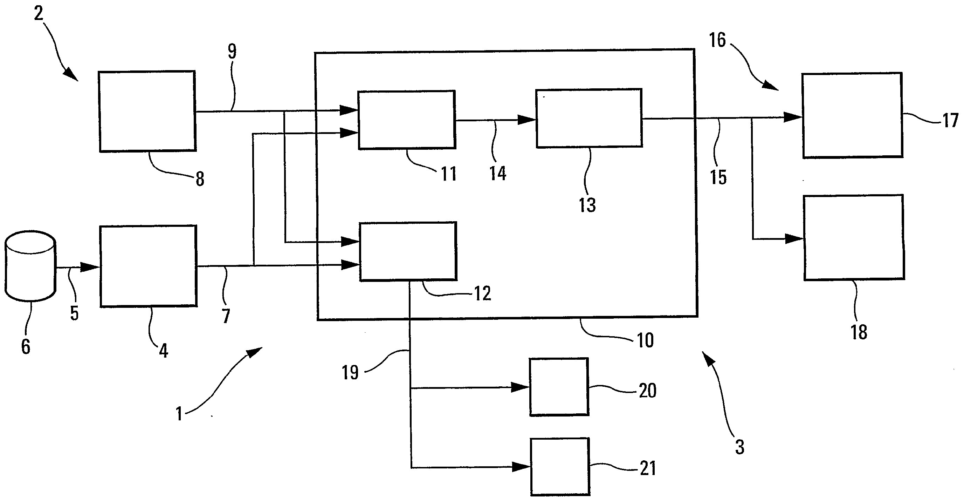

L'unique figure du dessin annexé fera bien comprendre comme l'invention peut être réalisée. Cette figure unique est le schéma synoptique d'un système de pilotage conforme à l'invention.

Le système 1 conforme à l'invention et représenté schématiquement sur la figure, est destiné au pilotage d'un aéronef, en particulier d'un avion de transport militaire. Plus particulièrement, il a pour but au moins de piloter l'aéronef lors d'une approche autonome (c'est-à-dire en l'absence d'informations permettant de mettre en oeuvre une approche usuelle de précision aux instruments) en vue d'un atterrissage sur une piste d'atterrissage (non représentée).

Ledit système de pilotage 1 qui est embarqué sur ledit aéronef (non représenté), est du type comportant :
- des sources d'informations 2 précisées ci-dessous, qui engendrent au moins une indication de position relative à la position effective en trois dimensions de l'aéronef, ainsi que des informations permettant de caractériser un axe d'approche virtuel, pour l'approche de la piste d'atterrissage. Bien entendu, ces informations, considérées dans l'approche autonome de la présente invention, ne comprennent pas de données issues de stations de guidage situées au sol, comme dans le cas d'une approche de précision aux instruments par exemple ; et
- des moyens de traitements 3 qui reçoivent les informations précitées des sources d'informations 2, qui sont susceptibles de déterminer des déviations entre la position effective de l'aéronef et la position qu'il aurait s'il était sur ledit axe d'approche virtuel, et qui utilisent les résultats de ces traitements comme précisé ci-dessous.

Dans un mode de réalisation particulier, lesdites sources d'informations 2 comportent :
- un calculateur de gestion de vol 4, de type FMS ("Flight Management System" en anglais) par exemple, qui est relié :
   - par l'intermédiaire d'une liaison 5 à une base de données 6 qui contient au moins lesdites informations permettant de caractériser ledit axe d'approche virtuel ; et
   - par l'intermédiaire d'une liaison 7 auxdits moyens 3 ; et
- un système de positionnement 8, qui est relié par l'intermédiaire d'une liaison 9 auxdits moyens 3 et qui est formé de manière à déterminer la position effective courante en trois dimensions (c'est-à-dire en latitude, longitude et altitude) de l'aéronef, et ceci uniquement à l'aide de moyens embarqués précisés ci-dessous.

Selon l'invention, lesdits moyens de traitement 3 font partie d'un calculateur de guidage de vol 10 de type FG ("flight guidance" en anglais), qui comporte :
- un moyen de calcul 11 qui est relié par l'intermédiaire de la liaison 7 audit système de gestion de vol 4 et par l'intermédiaire de la liaison 9 audit système de positionnement 8, qui reçoit ladite indication de position dudit système de positionnement 8 et les informations caractérisant l'axe d'approche virtuel dudit système de gestion de vol 4 (qui extrait ces informations de la base de données 6), et qui calcule directement à l'aide de toutes ces informations, de la manière précisée ci-dessous, des déviations linéaires (ou métriques). Ces déviations linéaires représentent les distances linéaires perpendiculaires (exprimées par exemple en mètres) entre la position effective de l'aéronef et l'axe d'approche virtuel, une première distance étant calculée dans le plan horizontal et une seconde distance étant calculée dans le plan vertical ;
- un moyen de calcul 12 qui est lié auxdites liaisons 7 et 9 et qui calcule, à l'aide des informations précitées, de façon usuelle, des déviations angulaires latérales et verticales entre la position effective de l'aéronef et la position qu'il aurait s'il était sur ledit axe d'approche virtuel ; et
- un moyen de calcul 13 qui est relié par l'intermédiaire d'une liaison 14 audit moyen de calcul 11 et qui est formé de manière à calculer, directement à l'aide des déviations linéaires reçues dudit moyen de calcul 11, des consignes de pilotage de l'aéronef, les consignes de pilotage ainsi calculées pouvant être transmises par l'intermédiaire d'une liaison 15 à des moyens 16 d'aide au pilotage.

Lesdits moyens 16 utilisent les consignes de pilotage reçues dudit calculateur de guidage de vol 10 pour permettre le guidage de l'aéronef jusqu'à son atterrissage, soit directement (lesdits moyens 16 peuvent comporter à cet effet un pilote automatique usuel 17) soit indirectement (lesdits moyens 16 peuvent alors comporter un directeur de vol 18 usuel, pour présenter les consignes de pilotage au pilote qui réalise dans ce cas le guidage manuellement).

A la différence d'un système de pilotage usuel permettant de piloter l'aéronef lors d'une approche de non précision, les déviations angulaires verticales et latérales qui sont calculées de façon usuelle par le moyen de calcul 12 ne sont pas utilisées pour déterminer les déviations linéaires (qui sont calculées directement par le moyen de calcul 11 dans le cadre de la présente invention). Toutefois ces déviations angulaires latérales et verticales peuvent être transmises, par l'intermédiaire d'une liaison 19, à des dispositifs utilisateurs, et en particulier :
- à un système d'affichage et de contrôle 20, par exemple de type CDS ("Control and Display System" en anglais), qui affiche lesdites déviations angulaires sur au moins un écran du poste de pilotage de l'aéronef ; et
- un système d'alerte et de surveillance 21, par exemple du type FWS ("Flight Warning System" en anglais), qui utilise ces déviations pour réaliser des surveillances usuelles.

Ainsi, lorsque lors d'un vol de l'aéronef le pilote désire réaliser une approche autonome (suivant un axe d'approche virtuel) en vue d'un atterrissage sur une piste, il sélectionne ce mode d'approche à l'aide d'une interface homme/machine prévue de façon usuelle sur le système de gestion de vol 4. Ledit système de vol 4 extrait alors les informations permettant de caractériser l'axe d'approche virtuel de la base de données 6 qui est une base de données de navigation de l'aéronef. Ces informations sont transmises en temps réel au calculateur de guidage de vol 10. Le système de positionnement 8 fournit également audit calculateur de guidage de vol 10, en temps réel, la position effective courante en trois dimensions de l'aéronef, qui comprend la position en deux dimensions (latitude, longitude) dans le plan horizontal ainsi que l'altitude géométrique. A l'aide dudit axe d'approche et de ladite position en trois dimensions, le calculateur de guidage de vol 10 calcule à la fois :
- des déviations angulaires qui sont affichées sur un écran du système d'affichage et de contrôle 20 et qui sont utilisées pour des surveillances par le système d'alerte 21 ; et
- des déviations linéaires que ledit calculateur de guidage de vol 10 utilisent pour déterminer les consignes de pilotage qui sont transmises par l'intermédiaire de la liaison 15 aux moyens utilisateurs 16.

La spécificité de l'architecture du système de pilotage 1 conforme à l'invention (utilisé pour une approche autonome) est le fait de calculer les déviations linéaires directement dans le calculateur de guidage de vol 10, ce qui permet d'optimiser la chaîne de guidage.

Dans un mode réalisation particulier, ledit système de positionnement 8 comporte, pour déterminer la position effective courante en 3D de l'aéronef ;
- un dispositif de positionnement par satellites ;
- des capteurs barométriques ; et
- les centrales inertielles de l'aéronef.

Comme dispositif de positionnement par satellites, on utilise de préférence un système GPS ("Global Positionning System" en anglais) de type militaire. Toutefois, il est également envisageable d'utiliser un système de navigation global par satellites de type GNSS ("Global Navigation Satellite System" en anglais), un système d'augmentation basé sur les satellites de type SBAS ("Satellite Based Augmentation System" en anglais) ou un système de positionnement par satellites de type GALILEO.

Dans un mode de réalisation particulier, ledit système de positionnement 8 et ledit calculateur de guidage de vol 10 sont réalisés chacun à partir de trois éléments, à savoir trois unités de positionnement et trois calculateurs. Dans ce cas, chacune des trois unités de positionnement calcule une position en deux dimensions et une altitude hybride qu'il envoie aux trois calculateurs. Chaque calculateur consolide une position en deux dimensions et une altitude à partir des trois données reçues. Le système de positionnement 8 détermine, en fonction de considérations techniques telles que la constellation des satellites, une précision et un niveau d'intégrité des positions calculées. Si ces paramètres sont inférieurs aux performances requises pour une approche autonome, le système de positionnement 8 envoie un message au calculateur de gestion de vol 4 qui déclare l'approche autonome indisponible à l'équipage, par exemple par l'intermédiaire d'un affichage en particulier sur un écran du système d'affichage et de contrôle 20. Les caractéristiques précédentes permettent de sécuriser l'utilisation de la position en trois dimensions de l'aéronef dans le guidage. De plus, l'utilisation directe de cette position en trois dimensions par le calculateur de guidage de vol 10 permet d'optimiser le temps de latence et donc la précision de la comparaison, notamment par rapport à une architecture usuelle pour laquelle la position est hybridée dans un système de gestion de vol avant d'être utilisée par un récepteur multi-mode d'aide à l'atterrissage.

## Revendications

1. Système de pilotage d'un aéronef, au moins pour piloter l'aéronef lors d'une approche autonome en vue d'un atterrissage, ledit système de pilotage (1) comportant au moins :
- des sources d'informations (2) qui fournissent au moins une indication de position relative à la position effective en trois dimensions de l'aéronef et des informations permettant de caractériser un axe d'approche virtuel ; et
- des moyens de traitement (3) qui traitent des informations issues desdites sources d'informations (2), qui sont susceptibles de déterminer des déviations entre la position effective de l'aéronef et la position qu'il aurait s'il était sur ledit axe d'approche virtuel, et qui utilisent les résultats de ces traitements,
lesdites sources d'informations (2) comportant :
- un calculateur de gestion de vol (4) qui est associé à une base de données (6) contenant au moins lesdites informations permettant de caractériser ledit axe d'approche virtuel ;
- un système de positionnement (8) permettant de déterminer la position effective en trois dimensions de l'aéronef, uniquement à l'aide de moyens embarqués,
lesdits moyens de traitement (3) faisant partie d'un calculateur de guidage de vol (10) qui comporte :
- un premier moyen de calcul (11) pour calculer directement à l'aide de ladite indication de position et desdites informations caractérisant l'axe d'approche virtuel, des déviations linéaires entre la position effective de l'aéronef et ledit axe d'approche virtuel ;
- un deuxième moyen de calcul (12) pour calculer directement à l'aide de ladite indication de position et desdites informations caractérisant l'axe d'approche virtuel, des déviations angulaires latérales et verticales entre la position effective de l'aéronef et la position qu'il aurait s'il était sur ledit axe d'approche virtuel, les déviations angulaires latérales et verticales étant utilisées par des moyens auxiliaires (20, 21) qui sont reliés audit calculateur de guidage de vol (10) ; et
- un troisième moyen de calcul (13) pour calculer, à l'aide des déviations linéaires calculées par ledit premier moyen de calcul (11), des consignes de pilotage de l'aéronef,
les moyens auxiliaires correspondant à :
- un système d'affichage et de contrôle (20) configuré pour afficher lesdites déviations angulaires sur au moins un écran de poste de pilotage de l'aéronef ;
- un système d'alerte et de surveillance (21) configuré pour utiliser ces déviations pour réaliser des surveillances usuelles.

2. Système de pilotage selon la revendication 1, selon lequel il comporte, de plus, au moins un moyen (16) d'aide au pilotage qui est relié audit calculateur de guidage de vol (10) et qui utilise lesdites consignes de guidage pour aider à guider l'aéronef.

3. Aéronef, comportant un système de pilotage (1) tel que celui spécifié sous l'une quelconque des revendications 1 ou 2.

## Patentansprüche

1. System zum Steuern eines Flugzeugs, um das Flugzeug mindestens bei einem autonomen Anflug im Hinblick auf eine Landung zu steuern, wobei das Steuersystem (1) mindestens umfasst:
- Informationsquellen (2), die mindestens eine Positionsangabe in Bezug auf die tatsächliche dreidimensionale Position des Flugzeugs und Informationen bereitstellen, die es ermöglichen, eine virtuelle Anflugachse zu charakterisieren; und
- Verarbeitungsmittel (3), die aus den Informationsquellen (2) stammende Informationen verarbeiten, die in der Lage sind, Abweichungen zwischen der tatsächlichen Position des Flugzeugs und der Position, die es hätte, wenn es sich auf der virtuellen Anflugachse befände, zu bestimmen, und die die Ergebnisse dieser Verarbeitungen verwenden,
wobei die Informationsquellen (2) umfassen:
- einen Flugmanagementrechner (4), der mit einer Datenbank (6) verknüpft ist, die mindestens die Informationen enthält, die es ermöglichen, die virtuelle Anflugachse zu charakterisieren;
- ein Positioniersystem (8), das es ermöglicht, die tatsächliche dreidimensionale Position des Flugzeugs ausschließlich mithilfe der an Bord integrierten Mittel zu bestimmen,
wobei die Verarbeitungsmittel (3) Bestandteil eines Fluglenkrechners (10) sind, der umfasst:
- ein erstes Rechenmittel (11), um lineare Abweichungen zwischen der tatsächlichen Position des Flugzeugs und der virtuellen Anflugachse direkt mithilfe der Positionsangabe und der Informationen, die die virtuelle Anflugachse charakterisieren, zu berechnen;
- ein zweites Rechenmittel (12), um laterale und vertikale Winkelabweichungen zwischen der tatsächlichen Position des Flugzeugs und der Position, die es hätte, wenn es sich auf der virtuellen Abflugachse befände, direkt mithilfe der Positionsangabe und der Informationen, die die virtuelle Anflugachse charakterisieren, zu berechnen, wobei die lateralen und vertikalen Winkelabweichungen von zusätzlichen Mitteln (20, 21) verwendet werden, die mit dem Fluglenkrechner (10) verbunden sind; und
- ein drittes Rechenmittel (13), um mithilfe der vom ersten Rechenmittel (11) berechneten linearen Abweichungen Anweisungen zum Steuern des Flugzeugs zu berechnen,
wobei die zusätzlichen Mittel entsprechen:
- einem Anzeige- und Bediensystem (20), das dafür konfiguriert ist, die Winkelabweichungen auf mindestens einem Cockpit-Bildschirm des Flugzeugs anzuzeigen;
- einem Warn- und Überwachungssystem (21), das dafür konfiguriert ist, diese Abweichungen zu verwenden, um übliche Überwachungen auszuführen.

2. Steuersystem nach Anspruch 1, wobei es weiter mindestens ein Steuerhilfsmittel (16) umfasst, das mit dem Fluglenkrechner (10) verbunden ist und das die Lenkanweisungen verwendet, um beim Lenken des Flugzeugs zu helfen.

3. Flugzeug, das ein Steuersystem (1) wie dasjenige umfasst, das unter einem der Ansprüche 1 oder 2 spezifiziert ist.

## Claims

1. A system for piloting an aircraft, at least for piloting the aircraft during an autonomous approach for the purpose of landing, said piloting system (1) comprising at least:
- information sources (2) which provide at least one position indication relating to the actual three-dimensional position of the aircraft and information making it possible to characterize a virtual approach axis; and
- processing means (3) which process information arising from said information sources (2), which are capable of determining deviations between the actual position of the aircraft and the position that it would have if it were on said virtual approach axis, and which use the results of these processings,
said information sources (2) comprising:
- a flight management computer (4) which is associated with a database (6) containing at least said information making it possible to characterize said virtual approach axis;
- a positioning system (8) making it possible to determine the actual three-dimensional position of the aircraft, solely with the aid of onboard means,
said processing means (3) form part of a flight guidance computer (10) which comprises:
- a first calculation means (11) for directly calculating with the aid of said position indication and of said information characterizing the virtual approach axis, linear deviations between the actual position of the aircraft and said virtual approach axis;
- a second calculation means (12) for directly calculating with the aid of said position indication and of said information characterizing the virtual approach axis, lateral and vertical angular deviations between the actual position of the aircraft and the position that it would have if it were on said virtual approach axis, said lateral and vertical angular deviations being used by auxiliary means (20, 21) which are connected to said flight guidance computer (10); and
- a third calculation means (13) for calculating, with the aid of the linear deviations calculated by said first calculation means (11), aircraft piloting setpoints,
said auxiliary means corresponding to:
- a display and control system (20) which displays said angular deviations on at least one screen of the flight deck of the aircraft;
- a warning and surveillance system (21) which uses these deviations to carry out standard surveillance.

2. The piloting system as claimed in claim 1, whereby it comprises, moreover, at least one piloting aid means (16) which is connected to said flight guidance computer (10) and which uses said guidance setpoints to aid in guiding the aircraft.

3. An aircraft,
comprising a piloting system (1) such as that specified under any one of claims 1 or 2.
